# EUROPEAN PATENT APPLICATION

(11) **EP 1 932 573 A1**
(43) Date of publication of application: **18.06.2008**
(21) Application number: 07121287.2
(22) Date of filing: 22.11.2007
(51) Int. Cl.: A63F 13/10

(54) **System and method of using sudden motion sensor data for percussive game input**

(30) Priority: 17.12.2006 US 870404 P; 06.03.2007 US 682869
(71) Applicant: Information appliances associates, San Diego 92101 (US)
(72) Inventor: Goggin, Terence, San Diego 92101 (US); Goggin, Mark, San Diego 92101 (US)
(74) Representative: Patentanwälte Kewitz & Kollegen

(57) **Abstract**

A system and method influence game play in a computer game based on percussive input. The percussive input is measured by a sudden motion sensor used to park a hard disk drive head during sudden movement.

## Description

### PRIORITY REFERENCE TO PRIOR APPLICATIONS

This application claims benefit of and incorporates by reference U.S. patent application serial number 60/870,404, entitled "SMS Sensor as a Means of Percussive Game Input," filed on December 17, 2006, by inventors Terence Goggin et al.

### Technical Field

This invention relates generally to sudden motion sensor (SMS) data, and more particularly, but not exclusively, provides a system and method for using sudden motion sensor data for percussive game input.

### Background

Recently, Apple began shipping laptops that included a new piece of hardware known as a Sudden Motion Sensor, or SMS. The SMS can detect sudden acceleration of or a significant collision with the laptop.

According to a Wikipedia article on the SMS as of the time of writing:
With a triaxial accelerometer, the system detects sudden acceleration, such as when the computer is dropped, and prepares the relatively-fragile hard disk drive mechanism for impact. The system disengages the disk drive heads from the hard disk platters, preventing data loss and drive damage from a disk head crash. When the computer is stable, the drive operates normally again.
Broadly speaking, there have been two types of Sudden Motion Sensor. The sensor used in the G4-based laptops resolved approximately 52 counts per gravity, while the sensor used in the current Intel-based laptops resolves about 250 counts per gravity. In at least one model of Intel-based laptop, the MacBook Pro 15", Apple uses the Kionix KXM52-1050 three-axis accelerometer chip, with dynamic range of +/- 2g and bandwidth up to 1.5KHz. [...]
As of October 2006, Apple has not documented the API for the device, and its characteristics vary from model to model. [...]
IBM has an analogous system, the Active Protection System, found in some ThinkPads starting in 2003.
Acer has a similar system, known as GraviSense, found in some TravelMate-series notebooks manufactured in 2006.

The intended purpose of the SMS is to protect the hard drive in the event that the laptop is, for example, dropped or knocked off a table, On the surface, the SMS just seems to be a solid engineering concept. However, others have been using the SMS for other purposes.

The Macintosh community has already begun to experiment with less serious user-input uses of the SMS. Most of these are centered on demonstrating the SMS Sensor's purpose and use.
- The SiesMac project uses the SMS Sensor to turn the user's Mac into a makeshift seismograph.
- The MacSaber project causes the Mac to make StarWars light-saber-like sounds based on the movement of the Mac.
- Apple itself has applied for a patent (United States Patent Application 20050190059) on a security system based on acceleration.
- Similarly, the MultiAlarm application uses the SMS Sensor as a security system, emitting a high-pitched noise if the Mac is moved without permission or warning.

Some SMS applications are loosely game-oriented:
- Bubblegym uses the SMS as a means of providing tilt-related feedback to the game. That is, the object is to tilt the Mac in such a way as to cause various items in the game to roll into slots, etc.
- Analog Laptop Extension uses the tilt again, but this time as a means of controlling a virtual marionette puppet.
- The one product, Skip Checker, that does treat SMS Sensor data as percussive in nature is not at all a game. Rather, this is used as a tool to operate Apple's iTunes application. That is, a tap or bump on the Mac causes the Skip Checker application to make iTunes skip to the next track.

As such, none of the conventional applications of SMS use the SMS data for percussive input to games. Accordingly, a new system and method are needed to enable the use of SMS data for percussive game input.

### SUMMARY

A system and method influence game play in a computer game based on percussive input. The percussive input is measured by a sudden motion sensor used to park a hard disk drive head during sudden movement.

In an embodiment, the method comprises: reading sudden motion sensor data during an impact to a computer; determining if the read data exceeds a threshold; and adjusting game play if the read data exceeds the threshold.

In an embodiment, the system comprises: a sudden motion sensor engine and a game. The sudden motion sensor engine reads sudden motion sensor data during an impact to a computer. The game, which is communicatively coupled to the sudden motion sensor engine, determines if the read data exceeds a threshold and adjusts game play if the read data exceeds the threshold.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.
FIG. 1 is a block diagram illustrating a system in accordance with a first embodiment of the present invention;
FIG. 2 is a block diagram illustrating a persistent memory of the system;
FIG. 3 is a flowchart illustrating a method of generating SMS calibration and motion threshold data for use in percussive game play;
FIG. 4 is a flowchart illustrating a method of using SMS data in percussive game play; and
FIG. 5 is a diagram illustrating a pinball game according to an embodiment of the invention.

### DETAILED DESCRIPTION OF THE ILLUSTRATED EMBODIMENTS

The following description is provided to enable any person having ordinary skill in the art to make and use the invention, and is provided in the context of a particular application and its requirements. Various modifications to the embodiments will be readily apparent to those skilled in the art, and the principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein.

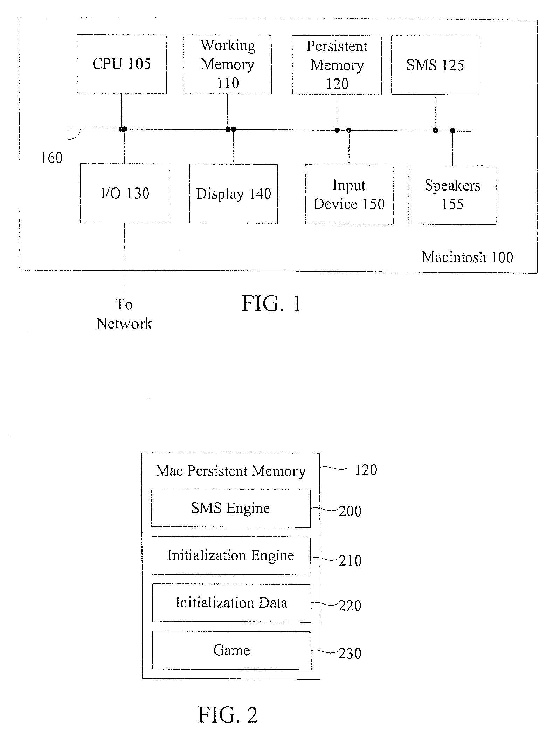

FIG. 1 is a block diagram illustrating a system 100 in accordance with a first embodiment of the present invention. In an embodiment of the invention, the system 100 includes a MACINTOSH laptop computer. In another embodiment of the invention, the system 100 includes any device having a processor and SMS, such as a wireless phone, personal digital assistant, MP3 player, etc.

The system 100 includes a central processing unit (CPU) 105; a working memory 110; a persistent memory 120; a SMS 125; an input/output (I/O) interface 130; a display 140; an input device 150; and speakers 155 all communicatively coupled to each other via a bus 160. The CPU 105 may include an INTEL XEON microprocessor, a Motorola POWERPC microprocessor, or any other processor capable to execute software stored in the persistent memory 120. The working memory 110 may include random access memory (RAM) or any other type of read/write memory devices or combination of memory devices. The persistent memory 120 may include a hard drive, read only memory (ROM) or any other type of memory device or combination of memory devices that can retain data after the system 100 is shut off. The SMS 125, as described above, includes an accelerometer that generates data relating to sudden motion (e.g., sudden acceleration). In an embodiment, the I/O interface 130 is communicatively coupled, via wired or wireless techniques, to a network, such as the Internet. The display 140 may include a flat panel display, cathode ray tube display, or any other display device. The input device 150, may include a keyboard, mouse, touch screen or other device for inputting data, or a combination of devices for inputting data. The speakers 155, which are optional like other components of the invention, emit sound in mono or stereo.

In an embodiment of the invention, the system 100 may also include additional devices, such as network connections, additional memory, additional processors, LANs, input/output lines for transferring information across a hardware channel, the Internet or an intranet, etc. One skilled in the art will also recognize that the programs and data may be received by and stored in the system 100 in alternative ways.

During operation of the system 100, data from the SMS 125 is used to influence game play on the system 100. For example, in a pinball game embodiment, a knock on the system 100 would generate corresponding SMS 125 data, which would cause a ball in play to move accordingly. As such, a player can nudge a ball in the pin ball embodiment by nudging the system 100 appropriately. Other embodiments include arcade games, in which corresponding physical embodiments requiring tapping, bumping, and/or nudging to effect game play; story games that require you to knock on a door or tap out Morse code to complete a puzzle; and music-based games wherein the SMS Sensor could serve as a drum pad or other percussive instrument, etc.

FIG. 2 is a block diagram illustrating a persistent memory 120 of the system 100. The memory 120 includes an SMS engine 200; an initialization engine 210; initialization data 220; and a game 230. The SMS engine 200 reads data from the SMS 125 and feeds it to other software, such as the initialization engine 210 and the game 230. The initialization engine 210 sets up calibration and motion threshold data, which is stored as initialization data 220.

Data from the SMS comes in the form of three values for each of the three axes in which the SMS 125 measures movement. In other embodiments, there may be only one or two values for a one or two-axis accelerometer. The first step in making sense of these three numeric values is to determine the base level, as there is always some small movement being detected - motion from the hard drive itself, perhaps a CD ROM drive, a keyboard being typed on, etc. To determine the base level or calibration points, the initialization engine 210 can ask the user to simply ensure that the laptop is on a stable surface, and then take a reading of the values from the SMS 125.

Additionally, the initialization engine 210 might ask the user to bump, tap, smack or otherwise hit the laptop with the same force they'll likely use when operating the game later. The difference between the "at rest" readings and the "sample bump" readings is the threshold that later percussive input must pass in order to cause a reaction in the game 230. Alternatively, a default threshold value can be used independent of any measurements and calculations by the initialization engine 210. The threshold value can include 3 values (one per axis) or a single value (e.g., an identical minimum for each axis or a minimum that a measurement in one of three axes must exceed) or two values (e.g., x and y axis values).

The initialization data 220 includes the threshold value(s) as discussed above and, in one embodiment, the calibration data from when the system 100 is at rest. In an embodiment of the invention, the initialization data 220 further includes a maximum value(s) in which game play is altered if a read SMS value exceeds the maximum value(s), typically in a negative manner. This has the effect of encouraging players not to strike the system 100 in a manner that could cause damage to the system 100.

The game 230 includes any game effected my percussive input. The game 230 can be modeled on a physical game effected by percussive input, e.g., pinball, in one embodiment. In another embodiment, the game 230 can be modeled on one or more percussive musical instruments, e.g., drums.

During game 230 operation, the SMS engine 200 continuously reads the constantly changing SMS data from the SMS 125; in one embodiment, every so many fractions of a second. The game 230 then compares the SMS data to threshold data, and if the SMS data exceeds the threshold data, then the game 230 treats this as percussive input and adjusts game play accordingly. In an embodiment, the game 230 checks for a maximum value and if the SMS data exceeds the maximum value, the game 230 alters game play in a negative manner (e.g., ends the game; deducts from the score, etc.).

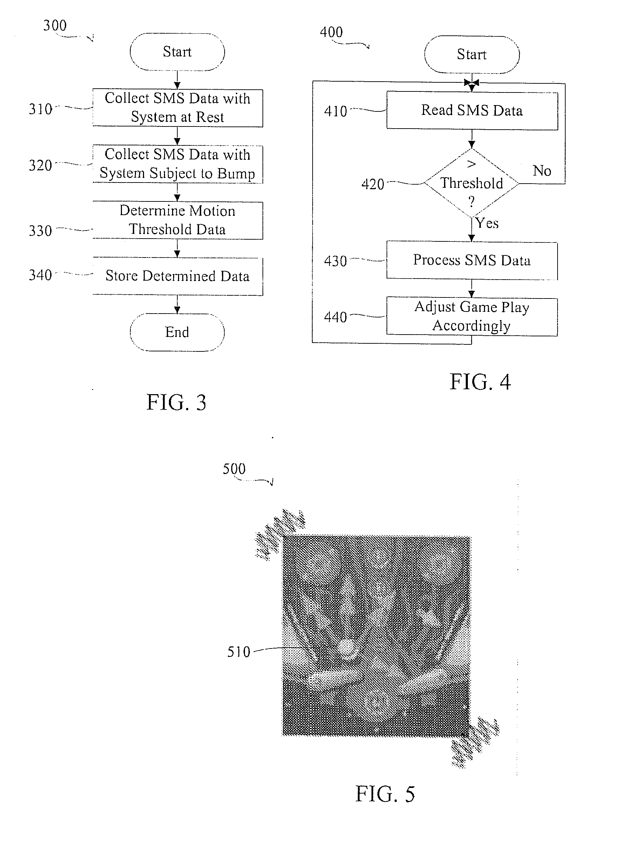

FIG. 3 is a flowchart illustrating a method 300 of generating SMS calibration and motion threshold data for use in percussive game play. First, SMS data is collected (310) with the system 100 at rest, e.g., placed on a stable non-moving surface. The system 100 is then bumped, tapped, nudged, etc. by a user and the resulting SMS data is collected (320). In an embodiment, the SMS data during the bumping to collect is determined by selecting a set of peak values during a time frame. In another embodiment, the SMS data to collect includes a peak value in any axis during a time frame. In another embodiment, the SMS data to collect include a minimum value from a peak set of values during a time frame. In another embodiment, the Motion threshold data is then determined (330) by subtracting the SMS data when the system 100 is at rest from the SMS data during the bump. This determined threshold data is then stored (340). In another embodiment, the threshold data stored (340) includes the set of peak values measured during the bump. In another embodiment, the threshold data stored (340) include the set of peak values during the bump minus a percentage (e.g., 10%). In another embodiment, the threshold data stored (340) is the SMS data collected when the system 100 is at rest.

FIG. 4 is a flowchart illustrating a method 400 of using SMS data in percussive game play. First, SMS data is read (410). It is then determined (420) if the read SMS data exceeds the threshold value previously stored (340). If the read SMS data does not exceed the threshold value (e.g., if any of the measured values in any axis does not exceed a threshold value or if the set of measured values does not exceed a set of threshold values, either independently or via a sum of values), then the method 400 returns to reading (410) the SMS data. In an embodiment, there can be a delay in reading (410) such that the reading (410) occurs at specific intervals.

If the read SMS data exceeds the threshold value previously stored (340), (e.g., if any of the measured values in any axis exceeds a threshold value or if the set of measured values exceeds a set of threshold values, either independently or via a sum of values), then the SMS data is processed (430). Processing, in one embodiment, includes determining the extent of the impact of the tap, nudge, bump, etc. by subtracting the stored (340) value from the read (410) value. Game play is then adjusted (440) accordingly. Adjustment (440) includes, in one embodiment, game play that would not have other occurred absent the tap, bump, etc. In a pinball embodiment, for example, a tap on a left side of the system 100 would cause a pinball to move rightwards. The extent of the rightwards movement is based on the extent of the impact from the processing (430). In another embodiment, the extent of adjusted movement of the pinball is constant regardless of extent of the impact. In an embodiment of the invention, if the extent of the impact is greater than a maximum value, the game play is adjusted in an alternate manner (e.g., game is voided for excessive force). The method 400 then returns to reading (410) the SMS data. The method 400 will continue to loop until game execution is finished.

FIG. 5 is a diagram illustrating a pinball game according to an embodiment of the invention. In an embodiment, as in the physical version, tapping the system 100 on the left will cause the pinball 510 to move right. Tapping the system 100 on the bottom will cause the pinball 510 to move upwards, etc.

The foregoing description of the illustrated embodiments of the present invention is by way of example only, and other variations and modifications of the above-described embodiments and methods are possible in light of the foregoing teaching. For example, while embodiments of the invention are described in reference to a MACINTOSH computer, any computer having a sudden motion sensor can implement embodiments of the invention. Further, components of this invention may be implemented using a programmed general purpose digital computer, using application specific integrated circuits, or using a network of interconnected conventional components and circuits. Connections may be wired, wireless, modem, etc. The embodiments described herein are not intended to be exhaustive or limiting. The present invention is limited only by the following claims.

## Claims

1. A method, comprising:
reading sudden motion sensor data during an impact to a device;
determining if the read data exceeds a threshold; and
adjusting game play if the read data exceeds the threshold.

2. The method of claim 1, wherein the adjusting adjusts game play in proportion to the read data values.

3. The method of claim 1, wherein the game play is adjusted in a negative fashion if the read data exceeds a maximum.

4. The method of claim 1, wherein the reading reads the data from a sudden motion sensor system used to park a head of a hard drive.

5. The method of claim 4, wherein the sudden motion sensor system includes a three-axis accelerometer.

6. The method of claim 5, wherein the adjusting adjusts game play if a value from any axis exceeds a threshold.

7. The method of claim 1, wherein the game play includes a pinball game.

8. The method of claim 1, wherein the device includes a MACINTOSH computer.

9. A system, comprising:
means for reading sudden motion sensor data during an impact to a device;
means for determining if the read data exceeds a threshold; and
means for adjusting game play if the read data exceeds the threshold.

10. A computer-readable medium having stored thereon instructions to cause a computer to execute a method, the method comprising:
reading sudden motion sensor data during an impact to a computer;
determining if the read data exceeds a threshold; and
adjusting game play if the read data exceeds the threshold.

11. A system, comprising:
a sudden motion sensor engine for reading sudden motion sensor data during an impact to a device; and
a game, communicatively coupled to the sudden motion sensor engine, for determining if the read data exceeds a threshold and adjusting game play if the read data exceeds the threshold.

12. The system of claim 11, wherein the game adjusts game play in proportion to the read data values.

13. The system of claim 11, wherein the game adjust game play in a negative fashion if the read data exceeds a maximum.

14. The system of claim 11, further comprising a sudden motion sensor used to park a head of a hard drive.

15. The system of claim 14, wherein the sudden motion sensor system includes a three-axis accelerometer.

16. The system of claim 15, wherein the game adjusts game play if a value from any axis exceeds a threshold.

17. The system of claim 11, wherein the game includes a pinball game.

18. The system of claim 11, wherein the device includes a MACINTOSH computer.

19. The system of claim 11, wherein the device includes a mobile phone.

20. The method of claim 1, wherein the device includes a mobile phone.
